(19) Europäisches Patentamt
European Patent Office
Office européen des brevets

(11) **EP 2 697 562 B1**

(12) **EUROPÄISCHE PATENTSCHRIFT**

(45) Veröffentlichungstag und Bekanntmachung des Hinweises auf die Patenterteilung:
**29.04.2015 Patentblatt 2015/18**

(21) Anmeldenummer: **12720444.4**

(22) Anmeldetag: **11.04.2012**

(51) Int Cl.:
*F21V 14/06* (2006.01)    *G02B 7/04* (2006.01)
*F21W 131/406* (2006.01)    *F21V 14/00* (2006.01)
*F21V 17/02* (2006.01)    *G03B 15/06* (2006.01)

(86) Internationale Anmeldenummer:
**PCT/EP2012/056537**

(87) Internationale Veröffentlichungsnummer:
**WO 2012/140051 (18.10.2012 Gazette 2012/42)**

(54) **VORRICHTUNG ZUM VERSTELLEN EINES IM GEHÄUSE EINES SCHEINWERFERS ODER OPTISCHEN GERÄTS ANGEORDNETEN OPTISCHEN TUBUS**

DEVICE FOR ADJUSTING AN OPTICAL TUBE ARRANGED IN THE HOUSING OF A HEADLIGHT OR OPTICAL DEVICE

DISPOSITIF POUR RÉGLER UN TUBE OPTIQUE DISPOSÉ DANS LE LOGEMENT D'UN PROJECTEUR OU D'UN APPAREIL OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2011 DE 102011007131**

(43) Veröffentlichungstag der Anmeldung:
**19.02.2014 Patentblatt 2014/08**

(73) Patentinhaber: **Arnold&Richter Cine Technik GmbH&Co. Betriebs KG**
**80799 München (DE)**

(72) Erfinder:
• **MELZNER, Erwin**
**83112 Frasdorf (DE)**

• **JONISCHKEIT, Michael**
**85567 Alxing (DE)**
• **HUNDHAMMER, Anton**
**83139 Söchtenau (DE)**
• **STEGMAIER, Klaus-Dieter**
**94234 Viechtach (DE)**

(74) Vertreter: **Ninnemann, Detlef**
**Patentanwälte**
**Maikowski & Ninnemann**
**Postfach 15 09 20**
**10671 Berlin (DE)**

(56) Entgegenhaltungen:
**EP-A1- 1 293 722    WO-A1-99/67569**
**WO-A1-2011/020920    US-A- 3 324 781**
**US-A1- 2002 060 911    US-A1- 2008 137 345**

**Beschreibung**

Scheinwerfer und andere optische Geräte, wie Teleskope und Mikroskope enthalten einen optischen Tubus mit einer Linse oder einem Linsensystem aus mehreren Linsen, die entweder im Tubus befestigt oder darin beweglich angeordnet sind. Aus optischen Gründen kann es erforderlich sein, die Linse oder das Linsensystem zur Fokussierung und Defokussierung nicht innerhalb des Tubus zu bewegen, sondern den Tubus zusammen mit der fest eingebauten Linse oder dem Linsensystem gegenüber dem Gehäuse des Scheinwerfers oder optischen Gerätes. Dies trifft insbesondere dann zu, wenn sich durch eine Verschiebung der Linse oder des Linsensystems innerhalb des Tubus eine störende Abblendung durch den Rand des Tubus ergeben würde, was bei einem beweglichen Tubus mit fest darin eingebauter Linse oder fest darin eingebautem Linsensystem nicht auftritt. Nach diesem Konstruktionsprinzip sind beispielsweise Mikroskopobjektive und eine Vielzahl fotografischer Objektive aufgebaut.

Um eine exakte Einstellung des Scheinwerfers oder optischen Gerätes zu gewährleisten, ist eine präzise Führung und Bewegung des Tubus gegenüber dem den Tubus aufnehmenden Gehäuse erforderlich. Hierzu sind zwei grundsätzliche Ausführungsformen bekannt.

In einer ersten Ausführungsform ist zum Verstellen des Tubus ein Schraubengewinde vorgesehen, bei dem das Gehäuse mit einem Innengewinde versehen wird, während der optische Tubus ein zum Innengewinde passendes Außengewinde aufweist. Eine Verstellung des Tubus entlang der optischen Achse des Scheinwerfers oder optischen Gerätes erfolgt durch Drehung des Tubus gegenüber dem Gehäuse, wobei die Ganghöhe des Schraubengewindes den Vortrieb des Tubus bei der Verstellung bestimmt.

Nachteilig bei dieser Ausführungsform ist zum einen, dass eine große Zahl von Umdrehungen erforderlich ist, um den Tubus um ein bestimmtes Maß zu verstellen, und zum anderen, dass wegen der Verwendung eines Schraubengetriebes der Tubus und das Gehäuse einen kreisförmigen Außen- bzw. Innenquerschnitt aufweisen müssen.

Um eine beliebige Querschnittsform für den Tubus und das Gehäuse, beispielsweise einen quadratischen Tubus und ein quadratisches Gehäuse, zu ermöglichen, erfolgt in einer zweiten Ausführungsform die Verstellung des Tubus mittels eines Linearantriebs, mit dem der Tubus ohne Verdrehung gegenüber dem Gehäuse entlang der optischen Achse des Scheinwerfers oder optischen Gerätes verstellbar ist. Ein derartiger Linearantrieb besteht beispielsweise aus einer mit dem Tubus verbundenen oder an der Außenfläche des Tubus angeformten Zahnstange, die von einem Ritzel angetrieben wird, das mit einer Drehachse verbunden ist, die zur manuellen Bedienung und Einstellung des Tubus einen Drehknopf aufweist. Dieses Konstruktionsprinzip wird beispielsweise für einfache Mikroskope verwendet.

Nachteilig bei dieser Ausführungsform ist es, dass je nach Neigung des Tubus und des Gehäuses eine variable Gewichtskraft am Tubus eingreift, die dazu führen kann, dass der Tubus aus der gewählten Einstellung heraus in das Gehäuse hineinbewegt bzw. aus dem Gehäuse herausbewegt wird, wenn das Zahnstangengetriebe keine oder eine zu geringe Selbsthemmung aufweist.

Dies ist insbesondere beim Einsatz eines Linearantriebs zur linearen Tubusverstellung bei einem leistungsstarken Scheinwerfer der Fall, um beispielsweise eine Stufenlinse gegenüber einer Lichterzeugungseinheit zu verstellen. Dabei treten so hohe Gewichtskräfte auf, dass eine große Selbsthemmung des Linearantriebs erforderlich wird. Eine große Selbsthemmung des Linearantriebs bedingt jedoch ein Erhöhung der zum Verstellen des Tubus benötigten Kraft, wodurch die Bedienung zur Verstellung des Tubus erheblich erschwert wird. Da leistungsstarke Scheinwerfer zumeist einen großen Durchmesser aufweisen und mit schwerem Zubehör, wie beispielsweise metallenen Flügeltoren und gläsernen Streuscheiben, verbunden werden, die in jeder Betriebslage mitbewegt werden müssen, scheidet der Einsatz eines einfachen Zahnstangengetriebes zur Tubusverstellung aus, weil die zur Bedienung des Scheinwerfers erforderlichen Kräfte zu groß werden.

EP 1 293 722, das als nächstliegender Stand der Technik angesehen wird, offenbart eine Vorrichtung nach dem Oberbegriff des Anspruchs 1.

Aufgabe der vorliegenden Erfindung ist es, eine Vorrichtung zum Verstellen eines Tubus eines Scheinwerfers oder optischen Gerätes der eingangs genannten Art anzugeben, die eine lineare, ruckfreie und präzise Bewegung eines optischen Tubus mit beliebiger Querschnittsform und einer bewegten Masse von mehreren Kilogramm ermöglicht, einen geringen Bauraum beansprucht, eine Einhaltung der gewählten Tubuseinstellung in allen Betriebslagen sicherstellt und durch den Einsatz einfacher Bauteile, insbesondere durch den Einsatz von Normteilen, geringe Herstellungskosten verursacht.

Diese Aufgabe wird erfindungsgemäß mit den Merkmalen des Anspruchs 1 gelöst.

Die erfindungsgemäße Lösung stellt eine Vorrichtung zum Verstellen eines Tubus eines Scheinwerfers oder optischen Gerätes bereit, die eine lineare, ruckfreie und präzise Bewegung eines optischen Tubus mit beliebiger Querschnittsform und einer bewegten Masse von mehreren Kilogramm ermöglicht, einen nur kleinen Bauraum beansprucht und eine Einhaltung der gewählten Tubuseinstellung in allen Betriebslagen, insbesondere auch bei stark geneigtem Scheinwerfer oder optischem Gerät sicherstellt. Durch den Einsatz einfacher Bauteile, insbesondere durch den Einsatz von Normteilen, werden geringe Herstellungskosten ermöglicht

Der erfindungsgemäßen Lösung liegt die Erkenntnis zugrunde, dass für den Einsatz eines Linearantriebs zur ruckfreien und präzisen Bewegung eines optischen Tubus mit beliebiger Querschnittsform und einer bewegten Masse in der Größenordnung von mehreren Kilogramm entweder ein selbsthemmendes Getriebe oder eine geeignete Bremseinrichtung erforderlich ist. Dabei kann eine beispielsweise als Scheibenbremse oder Konusbremse ausgebildete Bremseinrichtung auf einfache Weise den jeweiligen Anforderungen angepasst und konstruktiv ausgelegt werden.

Nachteilig dabei ist, dass die Bremseinrichtung einen eigenen Betätigungsmechanismus erfordert, der zusätzlich zum Betätigungsmechanismus zum Verstellen des Tubus vorzusehen ist, da der Tubus erst dann bewegt werden kann, wenn die Bremse der Bremseinrichtung gelöst ist, wobei dann unter Umständen die gesamte Gewichtskraft bewegt werden muss. Mit dem Erreichen der gewünschten Einstellung muss dann die Bremse der Bremseinrichtung wieder aktiviert werden, so dass eine Einhandbedienung unter Lastbedingungen nicht oder nur mit erheblichen Umständen zu bewerkstelligen ist.

Ein zweiter Betätigungsmechanismus ist insbesondere dann von Nachteil, wenn es sich um einen Scheinwerfer handelt, der in einer typischen Studio- oder Theaterinstallation hängend befestigt ist. Um eine Verstellung des Scheinwerfers bzw. Tubus vorzunehmen, muss die Bedienungsperson bei entsprechender Höhe der Aufhängung auf eine Leiter steigen, so dass eine Hand zum Festhalten benötigt wird und daher nur eine Hand frei ist für die Verstellung des Fokus. Ebenso ungünstig ist ein zweiter Betätigungsmechanismus, wenn die Verstell- und Bremseinrichtungen elektrisch ferngesteuert werden sollen, weil dann mehrere Motore, Elektromagnete oder ähnliches und ggf. auch mehrere elektronische Ansteuerschaltungen benötigt werden.

Selbsthemmende Getriebe, die die oben genannten Anforderungen an eine Bremsung oder Selbsthemmung und damit Beibehaltung der Tubuseinstellung auch bei einer bewegten Masse in der Größenordnung von mehreren Kilogramm erfüllen und eine Einhandbedienung ermöglichen, sind das Schnecken- und Spindelgetriebe. Beim Schneckengetriebe erfolgt die Verstellung über die Drehung eines Schneckenrades, das in eine Zahnstange eingreift, die in Verstellrichtung am Tubus befestigt bzw. am Tubus angeformt ist. Durch eine geringe Ganghöhe der Verzahnung können die auftretenden Kräfte leicht abgefangen werden und es ist eine Verstellung des Tubus mit geringem Kraftaufwand möglich. Da die Drehachse parallel zum Tubus verläuft, kann es von Vorteil sein, eine Umlenkung auf eine Antriebsachse mit einem Drehknopf durch ein weiteres Getriebe, wie beispielsweise ein Kegelgetriebe, vorzunehmen.

Beim Spindelgetriebe wird das Schneckenrad durch eine Schraubenspindel ersetzt, wobei der Tubus einen Zapfen, einen Bolzen oder dergleichen aufweist, der in die Kurvenbahn der Spindel eingreift und mit dem der Tubus hin- und herbewegt wird. Auch hier ist bei geeigneter Auslegung der Ganghöhe ein guter Kompromiss zwischen Selbsthemmung und Antriebskraft erzielbar.

Sowohl das Schneckengetriebe als auch das Spindelgetriebe weisen jedoch den Nachteil auf, dass die Übersetzung von der Antriebsachse hin zur Bewegung des Tubus ungünstig ist. Je besser nämlich die Selbsthemmung ist, desto geringer muss die Ganghöhe sein und desto mehr Umdrehungen der Antriebsachse sind erforderlich, um den Tubus um eine bestimmte Strecke zu verstellen. Da die Bedienungspersonen von professionellen Scheinwerfern daran gewöhnt sind, die Linse bzw. den Tubus und damit den Abstrahlwinkel des Scheinwerfers mit ein bis drei Umdrehungen zu verstellen, ist auch der Einsatz eines Schnecken- oder Spindelgetriebes nicht zielführend.

Die erfindungsgemäße Lösung, zum Verstellen eines in einem Gehäuse eines Scheinwerfers oder optischen Geräts angeordneten Tubus, der in Richtung der optischen Achse des Scheinwerfers oder optischen Gerätes im Gehäuse geführt ist, einen zwischen dem Tubus und dem Gehäuse angeordneten Verstellantrieb vorzusehen, der mit einer Bremseinrichtung gekoppelt ist, die bei nicht aktiviertem Verstellantrieb den Tubus kraft- und/oder formschlüssig mit dem Gehäuse verbindet, beim Aktivieren des Verstellantriebs die Verbindung zwischen dem Tubus und dem Gehäuse löst und eine Verstellung des Tubus entlang der optischen Achse des Scheinwerfers oder optischen Gerätes freigibt, wobei der Verstellantrieb insbesondere aus einem Linearantrieb mit einem mit dem Tubus verbundenen, parallel zur optischen Achse des Scheinwerfers oder optischen Gerätes ausgerichteten Formschlusselement und einem mit dem Gehäuse verbundenen, mit dem Formschlusselement in Eingriff stehenden Verstellelement besteht, löst die vorstehend genannten Probleme durch eine Trennung des eingestellten Zustands eines Tubus von einer Änderung der Tubuseinstellung.

Infolge dieser Trennung wird der Tubus einerseits im eingestellten Zustand mit maximaler Bremskraft fixiert, so dass die jeweilige Tubuseinstellung in allen Betriebslagen des Scheinwerfers oder optischen Gerätes gewährleistet ist, während andererseits zum Verstellen des Tubus nur geringe Verstellkräfte erforderlich sind und die Art der Verstellung so gestaltet werden kann, dass eine lineare, ruckfreie und präzise Bewegung eines optischen Tubus mit beliebiger Querschnittsform bei weitestgehend freier Wahl des Übersetzungsverhältnisses zwischen der Verstellung des Verstellelements und dem Verstellweg des Tubus ermöglicht wird.

Gleichzeitig ermöglicht eine Trennung des eingestellten Zustands eines Tubus von einer Änderung der Tubuseinstellung eine Einhandbedienung bzw. den Einsatz eines einzelnen Betätigungselementes, das durch Verbindung mit einem elektromotorischen Antrieb ferngesteuert werden kann.

Eine vorteilhafte Ausgestaltung der erfindungsgemäßen Lösung ist dadurch gekennzeichnet, dass das Formschlusselement aus einer auf der Außenfläche des Tubus angeordneten, parallel zur optischen Achse des Scheinwerfers oder optischen Gerätes ausgerichteten Zahnstange und das Verstellelement aus einem mit der Verzahnung der Zahnstange kämmenden Ritzel besteht, das drehfest mit einer manuell oder motorisch antreibbaren, axial verschiebbaren Drehachse verbunden ist, die vorzugsweise über eine die Bremseinrichtung aktivierende oder deaktivierende Steuereinrichtung mit einem manuell oder motorisch antreibbaren Betätigungselement koppelbar ist.

Diese bevorzugte Ausführungsform der Erfindung zeichnet sich insbesondere durch einen kleinen Bauraum, das heißt einen geringen Platzbedarf, die Verwendung einfacher, insbesondere genormter Teile und damit durch geringe Herstellkosten, sowie durch das Erfordernis von nur einer Antriebsachse aus, die motorisiert oder auf andere Weise einkanalig ferngesteuert werden kann.

Zur Erzeugung einer großen Bremskraft bei geringen Abmessungen der Bremseinrichtung besteht die Bremseinrichtung aus einem am Gehäuse befestigten hohlkegelförmigen Bremslager und einem mit der Drehachse verbundenen, innerhalb des hohlkegelförmigen Bremslagers angeordneten Bremskonus, der beim axialen Verschieben der Drehachse in die eine Richtung eine kraftschlüssige Verbindung mit dem hohlkegelförmigen Bremslager herstellt und in der entgegen gesetzten Richtung die formschlüssige Verbindung mit dem hohlkegelförmigen Bremslager aufhebt.

Aus diesem Grunde weisen die einander gegenüberstehenden Oberflächen des Bremskonus und des Bremslagers einen hohen Reibungskoeffizienten auf.

Um eine ausreichende Bremswirkung ohne Vergrößerung der Reibflächen des Bremskonus und des Bremslagers zu erzeugen, weisen nach einem weiteren Merkmal der Bremskonus und das Bremslager einander gegenüberstehende, profilierte Oberflächen auf, so dass eine Klemmung zwischen Bremskonus und Bremslager bewirkt wird.

Als Alternative können die Oberflächen des Bremskonus und des Bremslagers mit einem weichen Lagerwerkstoff, beispielsweise mit Gummi, versehen werden, wodurch eine große Bremswirkung erzeugt wird, die aber mit einer erhöhten Abnutzung bzw. der Gefahr eines Abscherens verbunden ist.

Da beim Einleiten einer Verstellung des Tubus durch Deaktivieren der Bremseinrichtung die momentane Einstellung des Tubus auch unter ungünstigen Betriebslagen beibehalten werden muss, bis die Bremsenrichtung vollständig ausgerastet bzw. deaktiviert ist, ist eine starke Grundreibung bzw. Bremsung des Tubus in seiner Führung erforderlich, ohne dass dies zu einer wesentlichen Anhebung der Kräfte zum Verstellen des Tubus führt. Die Kraft, mit der der Tubus gegen eine unerwünschte Bewegung Widerstand leistet, muss daher bei weitem die stärkste Kraft sein, die auf den Tubus beim Einleiten einer Verstellbewegung einwirkt.

Die Forderung, dass die aus der Grundreibung bzw. Bremsung des Tubus zusammengesetzte Kraft bzw. der Widerstand des Tubus gegen eine ungewollte Bewegung die bei weitem stärkste Kraft sein muss, um den Tubus so lange in seiner jeweiligen Einstellung zu halten, bis die Bremseinrichtung ausgerastet ist, wird dadurch erfüllt, dass in einer einfachen Ausführung die Haftreibung der Führungsschienen größer ist als die Reibungskraft zwischen dem Bremskonus und dem kraftschlüssig mit dem Bremskonus verbindbaren Bremslager der Bremseinrichtung.

Da in einer Serienfertigung die oben genannte Haftreibung der Führungsschienen ggf. nicht mit der nötigen Präzision eingestellt werden kann, kann es sinnvoll sein, die Führung des Tubus weitgehend reibungsfrei zu gestalten und dafür den Tubus mit einer zusätzlichen, aber kräftemäßig definierten Bremse zu versehen. Das kann zum Beispiel dadurch realisiert werden, dass der Tubus, ähnlich wie bei Auszügen von Schubladen in einer geschmierten Bahn, auf Kunststoff-Gleitflächen mit besonders geringer Reibung oder mit Hilfe von Kugeln oder Rollen bewegt wird, dass seine Bewegung aber mit Hilfe einer handelüblichen Reibungsbremse mit bekannten Eigenschaften gehemmt wird. Ebenso wäre es denkbar, einen weiteren Bremskonus auf die Antriebsachse zu setzen, der über eine Feder vorgespannt wird und so permanent mit einer definierten Kraft der selbständigen Bewegung des Tubus entgegen wirkt.

Eine konstruktiv einfache Lösung für die Steuereinrichtung zeichnet sich durch einen von der Drehachse abstehenden Steuerstift aus, der in eine Steuerkulisse des Betätigungselements eingreift, wobei die Steuerkulisse derart ausgebildet ist, dass die Drehachse in einer neutralen Ruhestellung axial derart ausgerichtet ist, dass der Bremskonus kraft- und/oder formschlüssig mit dem Bremslager verbunden ist, und beim Antreiben des Betätigungselements in der einen oder anderen Drehrichtung axial derart verschoben wird, dass die kraft- und/oder formschlüssige Verbindung des Bremskonus mit dem Bremslager gelöst wird, wobei die Steuerkulisse an einem zylindrischen Ansatz des Betätigungselements ausgebildet ist, der ein den Steuerstift aufweisendes Ende der Drehachse aufnimmt und gegenüber der Drehachse drehverstellbar ist und zwischen dem Ansatz und dem mit der Drehachse verbundenen Ritzel ein den Bremskonus in die kraft- und/oder formschlüssige Verbindung mit dem Bremslager vorspannendes Federelement angeordnet ist.

Um eine Tubusverstellung von beiden Seiten eines Scheinwerfers oder optischen Geräts zu ermöglichen, besteht das Formschlusselement aus zwei beabstandet zueinander auf der Außenfläche des Tubus und parallel zur optischen Achse des Scheinwerfers oder optischen Gerätes ausgerichteten Zahnstangen und das Verstellelement aus mit der Verzahnung der Zahnstangen kämmenden Ritzeln, die drehfest mit einer manuell oder motorisch antreibbaren, axial verschiebbaren Drehachse verbunden sind, wobei beide Enden der Drehachse einen senkrecht von der Drehachse abstehenden Steuerstift aufweisen und die Steuerstifte in jeweils eine Steuerkulisse in einem Ansatz von an beiden Enden der Drehachse angeordneten Betätigungselementen eingreifen. Dabei sind die Steuerkulissen in dieselbe Richtung ausgerichtet und die Betätigungselemente unabhängig voneinander drehbar im Gehäuse gelagert.

Zur optimalen, Platz sparenden Anordnung der Funktionselemente der Verstellvorrichtung ist zwischen dem einen Betätigungselement und dem einen Ritzel das Federelement und zwischen dem anderen Betätigungselement und dem anderen Ritzel die Bremseinrichtung angeordnet.

Das Betätigungselement kann entweder als manuell betätigbarer Drehknauf oder als motorisch angetriebene Welle, die unmittelbar oder über ein Vorgelege mit der Drehachse verbunden ist, ausgebildet sein.

Zur Sicherung der präzisen, ruckfreien, linearen Bewegung des optischen Tubus ist der Tubus mittels einer parallel zur optischen Achse des Scheinwerfers oder optischen Gerätes ausgerichteten Führungseinrichtung mit dem Gehäuse verbunden, wobei die Führungseinrichtung zwei diametral zueinander angeordnete, ineinander greifende Führungsschienenpaare enthält und die Führungsschienen vorzugsweise jeweils eine von der Außenwand des Tubus abstehende kastenförmige Führungsschiene aufweisen, die in jeweils eine als Ausnehmung der Innenwand des Gehäuses ausgebildete Führungsschiene, die ein mit der kastenförmigen Führungsschiene übereinstimmendes Querschnittsprofil aufweist, längsverstellbar eingreift.

Anhand eines in der Zeichnung dargestellten Ausführungsbeispieles soll der der Erfindung zugrunde liegende Gedanke näher erläutert werden. Es zeigen:

Fig. 1 eine perspektivische Darstellung eines in einem Scheinwerfergehäuse längsverstellbar gelagerten Tubus und einer Vorrichtung zum Verstellen des Tubus entlang der optischen Achse des Scheinwerfers;

Fig. 2 eine Seitenansicht des im Scheinwerfergehäuse gelagerten Tubus und der Vorrichtung zum Verstellen des Tubus entlang der optischen Achse des Scheinwerfers;

Fig. 3 einen senkrecht zur optischen Achse des Scheinwerfers geführten Querschnitt durch den Scheinwerfer gemäß den Fig. 1 und 2;

Fig. 4 eine vergrößerte perspektivische Darstellung des Verstellantriebs und der Bremseinrichtung zum Verstellen des Tubus entlang der optischen Achse des Scheinwerfers;

Fig. 5 eine vergrößerte perspektivische Darstellung der Steuereinrichtung und eines Teils des Verstellantriebs gemäß Fig. 4 und

Fig. 6 eine schematische Darstellung der Funktionselemente der Verstellvorrichtung und der in der Verstellvorrichtung wirksamen Kräfte.

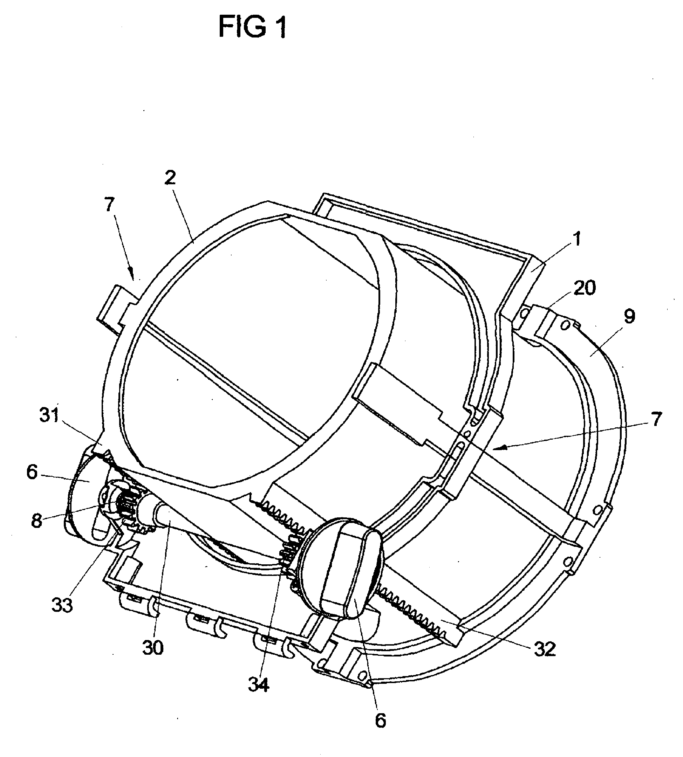

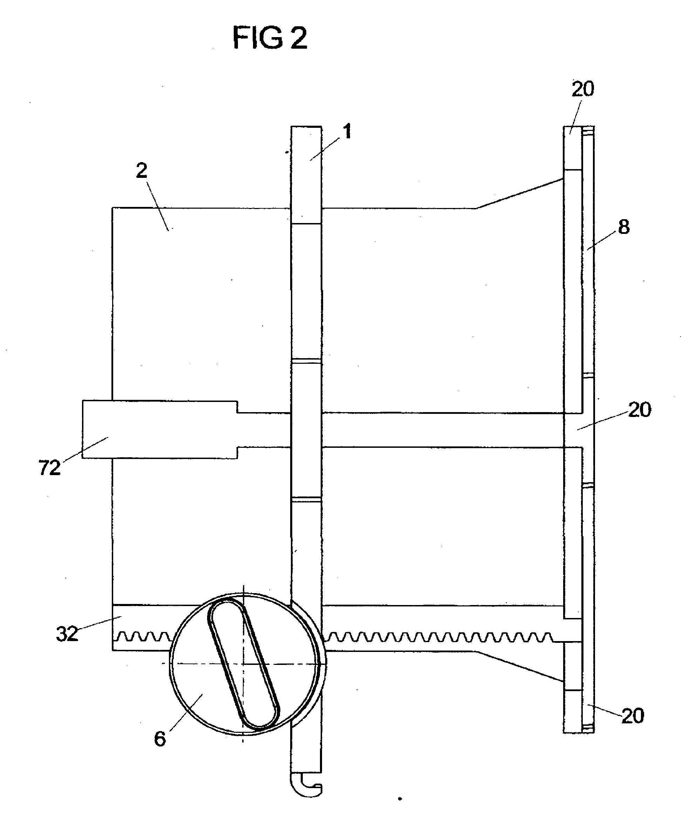

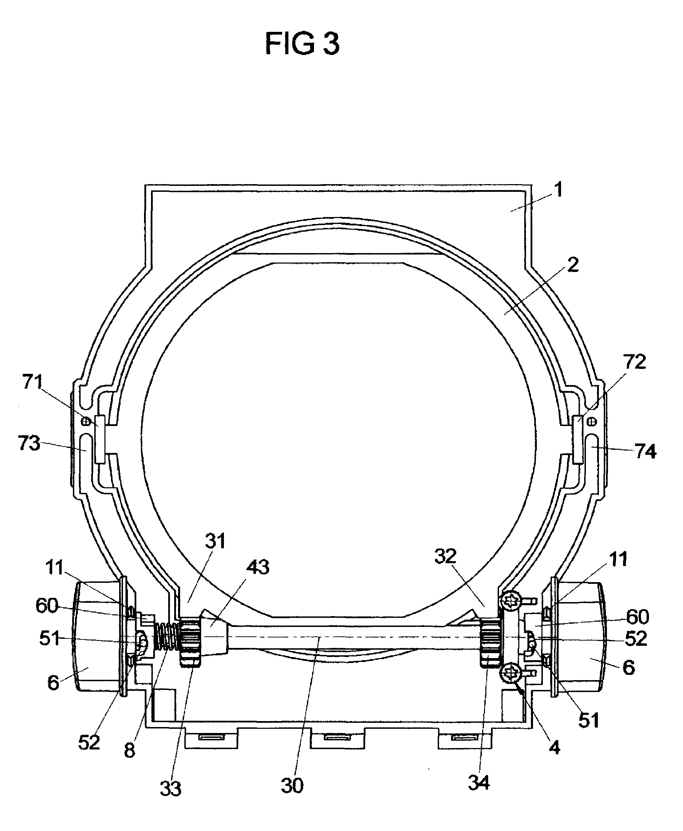

Fig. 1 zeigt in einer perspektivischen oder isometrischen Ansicht, Fig. 2 in einer Seitenansicht und Fig. 3 in einem Querschnitt Teile eines Scheinwerfers mit einem Gehäuse 1 und einem entlang der optischen Achse des Scheinwerfers verstellbaren, zylinderförmigen Tubus 2. Das Gehäuse 1 ist zur besseren Erkennbarkeit des Tubus 2 sowie dessen Führung und einer Vorrichtung zum Verstellen des Tubus 2 entlang der optischen Achse des Scheinwerfers rahmenförmig dargestellt.

An der in Lichtabstrahlrichtung vorderen Öffnung des Tubus 2 sind mehrere am Umfang verteilte Aufnahmen 20 für Scheinwerfer-Zubehör 9, wie beispielsweise gegeneinander verschiebbare Linsenplatten, ein Flügeltor, Gitter, Diffuser, Scrims, Gobos, holografische Streufolien oder dergleichen angeordnet, während in der Lichtabstrahlöffnung des Tubus 2 beispielsweise eine Lichtformeinrichtung in Form einer Feldlinse angeordnet ist.

Der Tubus 2 besteht vorzugsweise aus einem Kunststoff-Spritzgussteil und ist über zwei diametral zueinander angeordnete Führungseinrichtungen 7 präzise im Gehäuse 1 gelagert und in Richtung der optischen Achse des Scheinwerfers axial längsverschieblich im Gehäuse 1 gelagert. Die Führungseinrichtung 7 besteht aus zwei Führungsschienenpaaren 71, 73 bzw. 72, 74 mit jeweils einer von den Seiten des zylinderförmigen Tubus 2 abstehenden kastenförmigen Führungsschiene 71 bzw. 72 und jeweils einer in der Innenwand des Gehäuses 1 vorgesehenen, als Ausnehmung ausgebildeten Führungsschiene 73, 74, die ein mit der kastenförmigen Führungsschiene 71, 72 übereinstimmendes Profil aufweist.

Zum Verstellen des Tubus 2 entlang der optischen Achse des Scheinwerfers ist ein Verstellantrieb vorgesehen, der zwei mit dem Tubus 2 verbundene oder an die Außenwand des Tubus 2 angeformte Zahnstangen 31, 32 und zwei mit den Zahnstangen 31, 32 kämmende Ritzel 33, 34 enthält. Die Zahnstangen 31, 32 sind entsprechend der Darstellung in den Fig. 1 und 3 versetzt zu den Führungsschienenpaaren 71, 73 bzw. 72, 74 im unteren Bereich des Tubus 2 in einer parallel zur Ebene der Führungsschienenpaare 71, 73 bzw. 72, 74 verlaufenden Ebene angeordnet. Die Ritzel 33, 34 sind auf einer gemeinsamen Drehachse 30 angeordnet und mit dieser drehfest verbunden. Durch die doppelseitige Lagerung in den Führungsschienenpaaren 71, 73 bzw. 72, 74 und durch die doppelte Auflage der Zahnstangen 31, 32 auf den Ritzeln 33, 34 ist eine präzise, ruckfreie lineare Verstellung des Tubus 2 entlang der optischen Achse des Scheinwerfers gewährleistet.

Die Drehachse 30 des Verstellantriebs ist in zylinderförmigen Ansätzen 60 zweier an den Enden der Drehachse 30 angeordneter Betätigungselemente 6 in Form von manuell betätigten Drehknäufen winkelverstellbar gelagert, wobei die Betätigungselemente 6 in Lagerungen 11 des Gehäuses 1 drehbar gelagert sind. Die Drehachse 30 ist innerhalb der Ansätze 60 der Betätigungselemente 6 und damit auch gegenüber dem Gehäuse 1 axial verschiebbar gelagert. Da die Ritzel 33, 34 drehfest mit der Drehachse 30 verbunden sind, werden die Ritzel 33, 34 bei einer axialen Verschiebung der Drehachse 30 ebenfalls axial verlagert. Um dabei einen Eingriff der Verzahnungen der Ritzel 33, 34 in die Verzahnungen der Zahnstangen 31, 32 über die gesamte Zahnbreite zu gewährleisten, sind die Verzahnungen der Ritzel 33, 34 um das Maß der axialen Verstellbarkeit der Drehachse 30 breiter als die Verzahnungen der Zahnstangen 31, 32 ausgebildet.

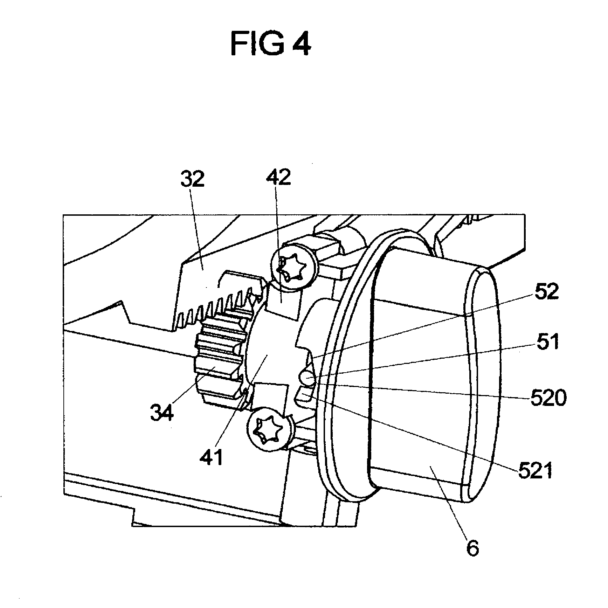

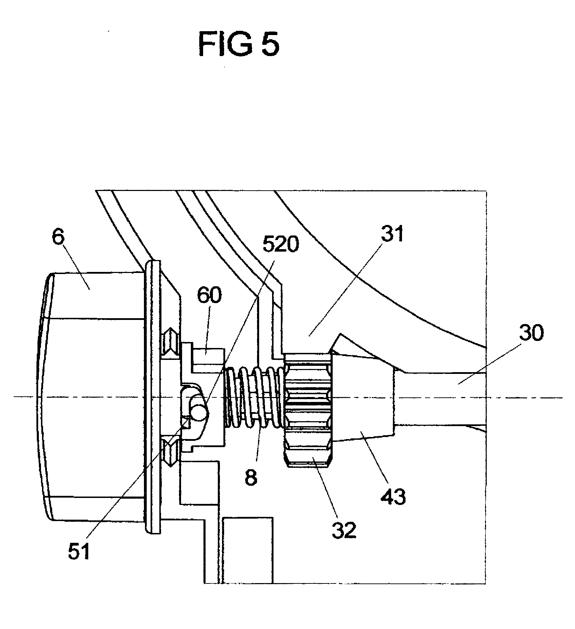

Wie insbesondere den Fig. 3 bis 5 zu entnehmen ist, ist an einem Ende der axial verstellbaren Drehachse 30 ein kegelstumpfförmiger Bremskörper oder Bremskonus 41 einer Bremseinrichtung 4 ebenfalls drehfest mit der Drehachse 30 verbunden und in dieser Ausführungsform einstückig mit dem Ritzel 34 verbunden. Der Bremskonus 41 durchdringt ein hohlkegelstumpfförmiges Bremslager 42, das am Gehäuse 1 befestigt ist. Das am anderen Ende der Drehachse 30 drehfest mit der Drehachse 30 verbundene Ritzel 33 ist ebenfalls einstückig mit einem Bremskonus 43 verbunden. Diesem Bremskonus 43 kann ebenfalls ein Bremslager zugeordnet werden, wenn dies zur Erhöhung der Bremskraft erforderlich ist.

Zwischen dem am anderen Ende der Drehachse 30 drehfest mit der Drehachse 30 verbundenen Ritzel 33 und dem zylinderförmigen Ansatz 60 des Betätigungselements 6 ist ein in dieser Ausführungsform als Druckfeder ausgebildetes Federelement 8 koaxial auf die Drehachse 30 aufgesteckt und bewirkt, dass in der Ruhestellung des Tubus 2 der Bremskonus 41 der Bremseinrichtung 4 reib- bzw. kraftschlüssig am hohlkegelstumpfförmigen Bremslager 42 der Bremseinrichtung 4 anliegt, so dass die Bremseinrichtung 4 wirksam ist und eine ungewollte Verstellung des Tubus 2 aus dessen Einstellung verhindert.

Alternativ oder zur zusätzlichen Vorspannung der axial verstellbaren Drehachse 30 in Richtung auf einen kraftschlüssigen Eingriff des Bremskonus 41 in das Bremslager 42 der Bremseinrichtung 4 kann zwischen dem zylinderförmigen Ansatz 60 des auf der Seite der Bremseinrichtung 4 angeordneten Betätigungselements 6 und dem Bremskonus 41 ein als Zugfeder ausgebildetes Federelement vorgesehen werden.

Zur axialen Verstellung der Drehachse 30 sind zwischen den die Drehachse 30 aufnehmenden und zum Betätigen des Verstellantriebs dienenden Betätigungselemente 6 und den Enden der Drehachse 30 Steuereinrichtungen 51, 52 vorgesehen, die aus im Endbereich der Drehachse 30 angeordneten, senkrecht von der Drehachse 30 abstehenden Steuerstiften 51 und in den zylindrischen Ansätzen 60 der Betätigungselemente 6 ausgebildeten Steuerkulissen 52 bestehen, in die die Steuerstifte 51 eingreifen. Die in den zylindrischen Ansätzen 60 der Betätigungselemente 6 ausgebildeten Steuerkulissen 52 sind in dieselbe Richtung ausgerichtet und weisen eine bogenförmige Kontur auf, die symmetrisch zu einem Scheitelpunkt 520 ausgebildet ist und an beiden Enden Endanschläge 521 aufweist. In der gebremsten Ruhestellung des Tubus 2 befinden sich die Steuerstifte 51 wegen der Vorspannung der Drehachse 30 durch die Wirkung des Federelements 8 in den Scheitelpunkten 520 der Kurvenbahnen der Steuerkulissen 52.

Wegen der übereinstimmenden Ausrichtung der Steuerkulissen 52 befindet sich die Kurvenbahn der einen Steuerkulisse 52 auf der Außenseite des zylindrischen Ansatzes 60 und die Kurvenbahn der anderen Steuerkulisse 52 im Innern des zylindrischen Ansatzes 60.

Wird eines der beiden Betätigungselemente 6 um einen festlegbaren Winkel gedreht, so muss - wegen der drehbaren Lagerung der Enden der Drehachse 30 in den zylindrischen Ansätzen 60 der Betätigungselemente 6 - derjenige der beiden Steuerstifte 51, der an der Steuerkulisse 52 des betreffenden Betätigungselements 6 anliegt, wegen der Vorspannung des Federelements 8 der Steuerkulisse 52, in die er eingreift, folgen. Durch die starre Verbindung der Steuerstifte 51 mit der Drehachse 30 wird durch die Winkelverstellung des betreffenden Steuerstiftes 51 die Drehachse 30 axial verschoben, so dass der in der Ruhestellung des Tubus 2 kraftschlüssig mit dem Bremslager 42 verbundene Bremskonus 41 verschoben und dadurch der Reib- oder Kraftschluss zwischen dem Bremskonus 41 und dem Bremslager 42 der Bremseinrichtung 4 aufgehoben wird. Beim weiteren Drehen des Betätigungselementes 6 über den vorbestimmten Winkel hinaus legt sich der Steuerstift 51 an den Endanschlag 521 der Steuerkulisse 52 an. Dadurch wird ein Formschluss vom Betätigungselement 6 über den Endanschlag 521 der Steuerkulisse 52 am zylindrischen Ansatz 60 des Betätigungselements 6, den Steuerstift 51, die Drehachse 30 und die drehfest mit der Drehachse 30 verbundenen Ritzel 33, 34 hergestellt. Dieser Formschluss bewirkt, dass der nach dem Lösen der Bremseinrichtung 4 ungebremste Tubus 2 über den Verzahnungseingriff der Verzahnungen der Ritzel 33, 34 in die Verzahnungen der Zahnstangen 31, 32 mit der weiteren Drehung des Betätigungselements 6 des Tubus 2 entlang der optischen Achse des Scheinwerfers verstellt wird.

Ist die gewünschte Einstellung des Tubus 2 erreicht und die Drehung des Betätigungselements 6 beendet, so bleibt der Tubus 2 stehen und die Drehachse 30 wird durch die Wirkung des Federelements 8 axial in ihre Ausgangsstellung zurückgestellt, wobei der Steuerstift 51 an der bogenförmigen Kontur der Steuerkulisse 52 entlang gleitet bis er den Scheitelpunkt 520 der Steuerkulisse 52 erreicht hat. In dieser axialen Stellung der Drehachse 30 ist der Bremskonus 41 wieder kraftschlüssig mit dem Bremslager 42 verbunden, so dass der Tubus 2 in der betreffenden Einstellung fixiert wird. Dabei wird das zuvor betätigte Betätigungselement 6 in die Ruhestellung zurückgedreht, in der der Steuerstift 52 wieder im Scheitelpunkt 520 der Kurvenbahn der Steuerkulisse 52 zu liegen kommt.

Eine Betätigung des anderen Betätigungselements 6 führt zu denselben, vorstehend beschriebenen Funktionsschritten zum Lösen der Bremseinrichtung 4, zur Herstellung des Formschlusses vom betreffenden Betätigungselement 6 über den Endanschlag 521 der Kurvenbahn der Steuerkulisse 52, den Steuerstift 51, die Drehachse 30 und die drehfest mit der Drehachse 30 verbundenen Ritzel 33, 34 zu dem mit den Verzahnungen der Ritzel 33, 34 kämmenden Verzahnungen der Zahnstangen 31, 32 an der Außenwand des Tubus 2.

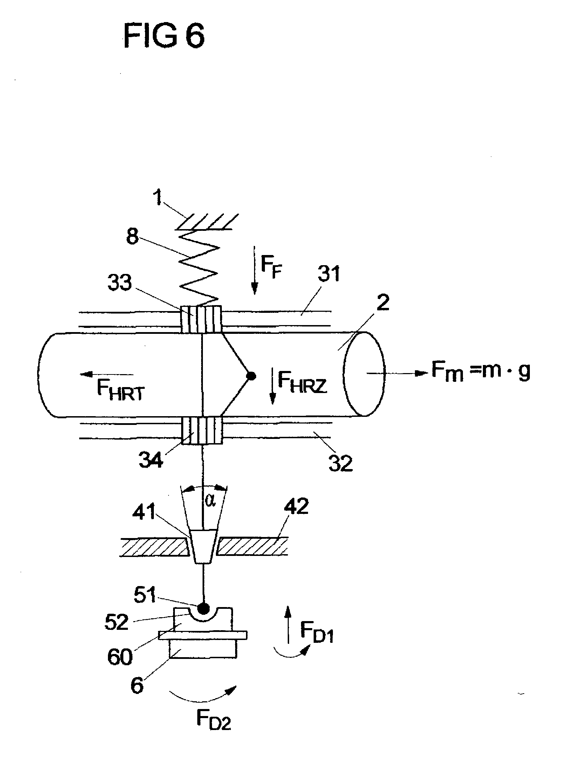

Fig. 6 zeigt eine schematische Darstellung der Funktionselemente der Verstellvorrichtung und der beim Feststellen des Tubus 2 in der Ruhestellung sowie beim Verstellen des Tubus 2 beteiligten Kräfte, Drehmomente und Reibungskoeffizienten, wobei die in die Fig. 6 eingetragenen Bezugsziffern für die schematisch dargestellten Funktionselemente der Verstellvorrichtung mit den vorstehend beschriebenen Bezugsziffern der Funktionselemente übereinstimmen. In dieser schematischen Darstellung bedeuten:

$F_{D2}$  die zum Verstellen des Tubus erforderliche Drehkraft

$F_{HRT}$  die Haftreibungskraft des Tubus (Tubuswiderstand)

$F_F$  die vom Federelement ausgeübte Federkraft

$F_m$  die Gewichtskraft des Tubus

$F_{HRB}$  die Bremskraft der Bremseinrichtung

$F_{D1}$  die zum Lösen der Bremseinrichtung erforderliche, am Betätigungselement aufzubringende Brems-Lösekraft

$F_{HRZ}$  die axiale Haftreibungskraft der Ritzel/Zahnstangen-Verzahnungen

Für eine einwandfreie Funktion der Verstellvorrichtung ist es erforderlich, dass

1. der Tubus 2 in seiner Ruhe- oder Ausgangsstellung unabhängig von der Betriebslage des Scheinwerfers, d.h. unabhängig von der Ausrichtung der optischen Achse des Scheinwerfers, fixiert wird. Zum Fixieren des Tubus in der Ruhestellung gilt die Bedingung, dass die Bremskraft $F_{HRB}$ größer ist als die Gewichtskraft $F_m$ des Tubus 2 abzüglich der Haftreibungskraft $F_{HRT}$ des Tubus 2

$$F_{HRB} \ > \ F_m - F_{HRT}$$

Die erforderliche Haftreibung des Tubus' ergibt sich also nach Umformung zu

$$F_{HRT} \ > \ F_m - F_{HRB}$$

oder wegen der Abhängigkeit der Haftreibungskraft $F_{HRB}$ des Tubus 2 von der Federkraft $F_F$ des Federelements, dem Reibungskoeffizienten $\mu$ und dem Kegelstumpfwinkel $\alpha$ zu

$$F_{HRB} = F_F * \frac{\pi * \mu}{2 \sin \frac{\alpha}{2}}$$

$$F_{HRT} \ > \ F_m - F_F * \frac{\pi * \mu}{2 \sin \frac{\alpha}{2}}$$

2. mit der Einleitung einer Längsverstellung des Tubus 2 der Tubus 2 so lange in seiner Ruhe- oder Ausgangsstellung fixiert bleiben muss, bis die Bremseinrichtung 4 vollständig gelöst ist. Um eine Verstellbewegung des Tubus beim Lösen der Bremseinrichtung zu verhindern, muss die Ausrastkraft $F_{D1}$ kleiner sein als die Haftreibungskraft $F_{HRB}$ des Tubus 2 abzüglich der Gewichtskraft $F_m$ des Tubus 2:

$$F_{D1} \ < \ F_{HRT} - F_m$$

3. zum Lösen der Bremseinrichtung die Ausrastkraft $F_{D1}$ größer ist als die Federkraft $F_F$ zuzüglich der Haftreibungskraft $F_{HRZ}$ der Verzahnungen

$$F_{D1} \ > \ F_F + F_{HRZ}$$

4. zum Verstellen des Tubus 2 die am Betätigungselement 6 angreifende Drehkraft $F_{D2}$ größer ist als die Summe aus der Haftreibungskraft $F_{HRB}$ des Tubus 2 und der Federkraft $F_F$

$$F_{D2} \ > \ F_{HRT} + F_F$$

5. zum Rückstellen der Drehachse nach einer Verstellbewegung des Tubus 2 die Federkraft $F_F$ größer ist als die Haftreibung der Verzahnungen resultierende Haftreibungskraft $F_{HRZ}$

$$F_F \ > \ F_{HRZ}$$

Aus den vorstehenden Bedingungen folgt, dass die Reibungskraft bzw. der Widerstand des Tubus 2 gegen eine Verstellbewegung die bei weitem stärkste Kraft sein muss, so dass ein wesentliches Merkmal für eine einwandfreie Funktion der Verstellvorrichtung eine starke Grundreibung bzw. Bremsung des Tubus 2 in seiner Führung ist.

Für eine einwandfreie Funktion der Verstellvorrichtung ist daher die Auslegung der Bremskraft und damit die Dimensionierung der Bremseinrichtung 4. Diese hängt im Wesentlichen von den Abmessungen der miteinander in Eingriff stehenden Flächen des Bremskonus 41 und des Bremslagers 42 sowie vom Reibungskoeffizienten der Bremsflächen und damit von dem Material des Bremskonus 41 und Bremslagers 42 bzw. vom Material der Oberflächen des Bremskonus 41 und Bremslagers 42 ab. Da zur Minimierung des Bauraums der Verstellvorrichtung auch geringe Abmessungen der Bremseinrichtung 4 erwünscht sind, ist die wirksame Fläche des Bremskonus 41 und Bremslagers 42 begrenzt, so dass die Wirkung der Bremseinrichtung 4 im Wesentlichen vom Reibungskoeffizienten abhängt.

Der Reibungskoeffizient kann durch eine entsprechende Oberflächengestaltung des Bremskonus 41 und Bremslagers 42, beispielsweise durch eine entsprechende Oberflächenstruktur, oder durch die Verwendung von Materialien mit hohem Reibungskoeffizienten, erhöht werden. So kann beispielsweise eine Beschichtung der Oberflächen des Bremskonus 41 und Bremslagers 42 bzw. die Verwendung entsprechender Einsätze aus einem weichen Lagerwerkstoff, wie beispielsweise Gummi, einen hohen Reibungskoeffizienten bewirken, wenn gleichzeitig sichergestellt ist, dass durch eine entsprechende Materialauswahl und ggf. konstruktive Randbedingungen keine oder eine nur geringfügig erhöhte Abnutzung auftritt und die Gefahr eines Abscherens des betreffenden Oberflächenmaterials eliminiert werden kann.

Bei einem konkreten Ausführungsmuster der erfindungsgemäßen Verstellvorrichtung betrug die bewegte Masse des Tubus 5,0 kg, der Reibungskoeffizient der Bremseinrichtung $\mu$=0,3 und der Kegelwinkel des Bremskonus bzw. Bremslagers $\alpha$=60°. Bei einer Drehkraft $F_{D2}$ zum Bewegen des Tubus von 90N, einer Haftreibung $F_{HRT}$ des Tubus von 70N, einer Brems-Lösekraft bzw. Kraft $F_{D1}$ zum Ausrasten der Bremseinrichtung von 12N, einer Federkraft $F_F$ des Federelements von 10N und einer axialen Haftreibungskraft $F_{HRZ}$ der Zahnräder von 1N ergibt sich eine Gewichtskraft $F_m$ von 49,05N und eine Bremskraft $F_{HRB}$ von 9,42N.

Mit dem vorstehenden Ausführungsbeispiel werden die oben genannten Bedingungen für eine einwandfreie Funktion der Verstellvorrichtung erfüllt.

## Bezugszeichenliste

| | |
|---|---|
| 1 | Gehäuse |
| 2 | Tubus |
| 4 | Bremseinrichtung |
| 6 | Betätigungselemente |
| 7 | Führungseinrichtungen |
| 8 | Federelement |
| 9 | Scheinwerfer-Zubehör |
| 11 | Lagerungen |
| 20 | Aufnahmen |
| 30 | Drehachse |
| 31, 32 | Zahnstangen |
| 33, 34 | Ritzel |
| 41, 43 | Bremskonus |
| 42 | hohlkegelstumpfförmiges Bremslager |
| 51 | Steuerstifte |
| 52 | Steuerkulissen |
| 60 | zylinderförmige Ansätze |
| 71, 72; 73, 74 | Führungsschienenpaare |
| 520 | Scheitelpunkt |
| 521 | Endanschläge |

## Patentansprüche

1. Vorrichtung zum Verstellen eines optischen Tubus, der in einem Gehäuse eines Scheinwerfers oder optischen Gerätes angeordnet und in Richtung der optischen Achse des Scheinwerfers oder optischen Gerätes im Gehäuse geführt ist, mit einem zwischen dem Tubus (2) und dem Gehäuse (1) angeordneten Verstellantrieb (30 - 34), einem Betätigungselement (6) und einer Bremseinrichtung (4), die bei nicht aktiviertem Verstellantrieb (30 - 34) den Tubus (2) kraft- und/oder formschlüssig mit dem Gehäuse (1) verbindet, beim Aktivieren des Verstellantriebs (30 - 34) die Verbindung zwischen dem Tubus (2) und dem Gehäuse (1) löst und eine Verstellung des Tubus (2) entlang der optischen Achse des Scheinwerfers oder optischen Gerätes freigibt,
**dadurch gekennzeichnet,**
**dass** der Verstellantrieb (30 - 34) über eine die Bremseinrichtung (4) aktivierende oder deaktivierende Steuereinrichtung (51, 52) mit dem Betätigungselement (6) derart koppelbar ist, dass bei Betätigung des Betätigungselements (6) die Bremseinrichtung (4) die Verbindung zwischen dem Tubus (2) und dem Gehäuse (1) löst, bei weiterer Betätigung des Betätigungselements (6) der Verstellantrieb (30 - 34) den Tubus (2) entlang der optischen Achse des Scheinwerfers oder optischen Gerätes verstellt und bei Beendigung der Betätigung des Betätigungselements (6) die Bremseinrichtung (4) den Tubus (2) wieder kraft- und/oder formschlüssig mit dem Gehäuse (1) verbindet.

2. Verstellvorrichtung nach Anspruch 1, **dadurch gekennzeichnet, dass** der Verstellantrieb (6; 30 - 34) aus einem Linearantrieb mit einem mit dem Tubus (2) verbundenen, parallel zur optischen Achse des Scheinwerfers oder optischen Gerätes ausgerichteten Formschlusselement (31, 32) und einem mit dem Gehäuse (1) verbundenen, mit dem Formschlusselement (31, 32) in Eingriff stehenden Verstellelement (33, 34) besteht.

3. Verstellvorrichtung nach Anspruch 2, **dadurch gekennzeichnet, dass** das Formschlusselement aus einer auf der Außenfläche des Tubus (2) angeordneten, parallel zur optischen Achse des Scheinwerfers oder optischen Gerätes ausgerichteten Zahnstange (31, 32) und das Verstellelement aus einem mit der Verzahnung der Zahnstange (31,32) kämmenden Ritzel (33, 34) besteht, das drehfest mit einer manuell oder motorisch antreibbaren, axial verschiebbaren Drehachse (30) verbunden ist.

4. Verstellvorrichtung nach Anspruch 3, **dadurch gekennzeichnet, dass** die Drehachse (30) über die die Bremseinrichtung (4) aktivierende oder deaktivierende Steuereinrichtung (51, 52) mit dem manuell oder motorisch antreibbaren Betätigungselement (6) koppelbar ist.

5. Verstellvorrichtung nach Anspruch 4, **dadurch gekennzeichnet, dass** die Bremseinrichtung (4) aus einem am Gehäuse (1) befestigten hohlkegelförmigen Bremslager (42) und einem mit der Drehachse (30) verbundenen, innerhalb des hohlkegelförmigen Bremslagers (42) angeordneten Bremskonus (41) besteht, der beim axialen Verschieben der Drehachse (30) in die eine Richtung eine kraftschlüssige Verbindung mit dem hohlkegelförmigen Bremslager (42) herstellt und in der entgegen gesetzten Richtung die formschlüssige Verbindung mit dem hohlkegelförmigen Bremslager (42) aufhebt.

6. Verstellvorrichtung nach Anspruch 5, **dadurch gekennzeichnet, dass** die einander gegenüberstehenden Oberflächen des Bremskonus (41) und des Bremslagers (42) einen hohen Reibungskoeffizienten aufweisen.

7. Verstellvorrichtung nach Anspruch 5, **dadurch gekennzeichnet, dass** die Steuereinrichtung einen von der Drehachse (30) abstehenden Steuerstift (51) aufweist, der in eine Steuerkulisse (52) eingreift, wobei die Steuerkulisse (52) derart ausgebildet ist, dass die Drehachse (30) in einer neutralen Ruhestellung axial derart ausgerichtet ist, dass der Bremskonus (41) kraft- und/oder formschlüssig mit dem Bremslager (42) verbunden ist, und beim Antreiben des Betätigungselements (6) in der einen oder anderen Drehrichtung axial derart verschoben wird, dass die kraft- und/oder formschlüssige Verbindung des Bremskonus (41) mit dem Bremslager (42) gelöst wird.

8. Verstellvorrichtung nach Anspruch 7, **dadurch gekennzeichnet, dass** die Steuerkulisse (52) an einem zylindrischen Ansatz (60) des Betätigungselements (6) ausgebildet ist, der ein den Steuerstift (51) aufweisendes Ende der Drehachse (30) aufnimmt und gegenüber der Drehachse (30) drehverstellbar ist und dass zwischen dem Ansatz (60) und dem mit der Drehachse (30) verbundenen Ritzel (33, 34) ein den Bremskonus (41) in die kraft- und/oder formschlüssige Verbindung mit dem Bremslager (42) vorspannendes Federelement (8) angeordnet ist.

9. Verstellvorrichtung nach mindestens einem der vorangehenden Ansprüche, **dadurch gekennzeichnet, dass** das Formschlusselement aus zwei beabstandet zueinander auf der Außenfläche des Tubus (2) und parallel zur optischen Achse des Scheinwerfers oder optischen Gerätes ausgerichteten Zahnstangen (31, 32) und das Verstellelement aus mit der Verzahnung der Zahnstangen (31, 32) kämmenden Ritzeln (33, 34) besteht, die drehfest mit einer manuell oder motorisch antreibbaren, axial verschiebbaren Drehachse (30) verbunden sind, dass beide Enden der Drehachse (30) einen senkrecht von der Drehachse (30) abstehenden Steuerstift (51) aufweisen und dass die Steuerstifte (51) in jeweils eine Steuerkulisse (52) in einem Ansatz (60) von an beiden Enden der Drehachse (30) angeordneten Betätigungselementen (6) eingreifen, wobei die Steuerkulissen (52) in dieselbe Richtung ausgerichtet sind.

10. Verstellvorrichtung nach Anspruch 9, **dadurch gekennzeichnet, dass** die Betätigungselemente (6) unabhängig voneinander drehbar im Gehäuse (1) gelagert sind.

11. Verstellvorrichtung nach mindestens einem der vorangehenden Ansprüche, **dadurch gekennzeichnet, dass** zwischen dem einen Betätigungselement (6) und dem einen Ritzel (33) das Federelement (8) und zwischen dem anderen Betätigungselement (6) und dem anderen Ritzel (34) die Bremseinrichtung (4) angeordnet ist.

12. Verstellvorrichtung nach mindestens einem der vorangehenden Ansprüche, **dadurch gekennzeichnet, dass** der Tubus (2) mittels einer parallel zur optischen Achse des Scheinwerfers oder optischen Gerätes ausgerichteten Führungseinrichtung (7) aus zwei diametral zueinander angeordneten, ineinander greifenden Führungsschienenpaaren (71 - 74) mit dem Gehäuse verbunden ist.

13. Verstellvorrichtung nach Anspruch 12, **dadurch gekennzeichnet, dass** die Führungsschienenpaare (71 - 74) jeweils eine von der Außenwand des Tubus (2) abstehende kastenförmige Führungsschiene (71, 72) aufweisen, die in jeweils eine als Ausnehmung der Innenwand des Gehäuses (1) ausgebildete Führungsschiene (73, 74), die ein mit der kastenförmigen Führungsschiene (71, 72) übereinstimmendes Querschnittsprofil aufweisen, längsverstellbar eingreifen.

**14.** Verstellvorrichtung nach mindestens einem der vorangehenden Ansprüche, **dadurch gekennzeichnet, dass** die Haftreibung der Führungsschienen (71 - 74) größer ist als die Reibungskraft zwischen dem Bremskonus (41) und dem kraftschlüssig mit dem Bremskonus (41) verbindbaren Bremslager (42) der Bremseinrichtung (4).

**15.** Verstelleinrichtung nach mindestens einem der vorangehenden Ansprüche, **dadurch gekennzeichnet, dass** die Drehachse (30) mit einer die Drehung der Drehachse (30) und damit eine selbständige Bewegung des Tubus (2) hemmenden zusätzlichen Bremseinrichtung verbunden ist.

**Claims**

**1.** A device for adjusting an optical tube, which is disposed in a housing of a spotlight or optical device and which is guided in the housing in the direction of the optical axis of the spotlight or optical device, with an adjustment drive (30 - 34), an operating element (6) and a brake device (4) disposed between the tube (2) and the housing (1), which with the adjustment drive (6; 30 - 34) not activated connects the tube (2) to the housing (1) in a non-positive locking and/or positive-locking manner and which on activation of the adjustment drive (30 - 34) releases the connection between the tube (2) and the housing (1) and enables adjustment of the tube (2) along the optical axis of the spotlight or optical device, **characterized in that**, the adjustment drive (30 - 34) can be coupled by means of a control device (51, 52) that activates or deactivates the brake device (4) to the operating element (6) such that on operating the operating element (6) the brake device (4) releases the connection between the tube (2) and the housing (1), on further operation of the operating element (6) the adjustment drive (30 - 34) adjusts the tube (2) along the optical axis of the spotlight or optical device and on terminating operation of the operating element (6) the brake device (4) again connects the tube (2) to the housing (1) in a non-positive locking and/or positive locking manner.

**2.** The adjustment device as claimed in claim 1, **characterized in that** the adjustment drive (6; 30 - 34) consists of a linear drive with a positive-locking element (31, 32) connected to the tube (2) and oriented parallel to the optical axis of the spotlight or optical device and an adjustment element (33, 34) connected to the housing (1) and engaged with the positive-locking element (31, 32).

**3.** The adjustment device as claimed in claim 2, **characterized in that** the positive-locking element consists of a toothed rack (31, 32) disposed on the outer surface of the tube (2) and oriented parallel to the optical axis of the spotlight or optical device and the adjustment element consists of a pinion (33, 34) meshing with the teeth of the toothed rack (31, 32), which is connected to a manually driven or motor-driven, axially displaceable rotation axle (30) so as to rotate therewith.

**4.** The adjustment device as claimed in claim 3, **characterized in that** the rotation axle (30) can be coupled to the manually driven or motor-driven operating element (6) by means of the control device (51, 52) for activating or deactivating the brake device (4).

**5.** The adjustment device as claimed in claim 4, **characterized in that** the brake device (4) consists of a hollow conical brake bearing (42) attached to the housing (1) and a brake cone (41) attached to the rotation axle (30) and disposed within the hollow conical brake bearing (42), which during axial displacement of the rotation axle (30) in one direction makes a non-positive locking connection to the hollow conical brake bearing (42) and in the opposite direction removes the positive locking connection to the hollow conical brake bearing (42).

**6.** The adjustment device as claimed in claim 5, **characterized in that** the mutually opposed surfaces of the brake cone (41) and of the brake bearing (42) have a high coefficient of friction.

**7.** The adjustment device as claimed in claim 5, **characterized in that** the control device comprises a control pin (51) protruding from the rotation axle (30), which engages in a control guide (52), wherein the control guide (52) is designed such that the rotation axle (30) is axially oriented in a neutral rest position such that the brake cone (41) is connected to the brake bearing (42) in a. non-positive locking and/or positive-locking manner, and during driving of the operating element (6) in one or other rotation direction is axially displaced such that the non-positive locking and/or positive-locking connection of the brake cone (41) and the brake bearing (42) is released.

**8.** The adjustment device as claimed in claim 7, **characterized in that** the control guide (52) is formed on a cylindrical fitting (60) of the operating element (6), which accepts an end of the rotation axle (30) comprising the control pin (51) and can be rotationally adjusted relative to the rotation axle (30), and **in that** a spring element (8) biasing the brake cone (41) in the non-positive and/or positive locking connection to the brake bearing (42) is disposed between the fitting (60) and the pinion (33, 34) that are connected to the rotation axle (30).

9. The adjustment device as claimed in at least one of the preceding claims, **characterized in that** the positive-locking element consists of two toothed racks (31, 32) disposed at a distance apart on the outer surface of the tube (2) and oriented parallel to the optical axis of the spotlight or optical device and the adjustment element consists of pinions (33, 34) that are meshed with the teeth of the toothed rack (31, 32) and which are connected to a manually driven or motor-driven, axially displaceable rotation axle (30) so as to rotate therewith, that both ends of the rotation axle (30) comprise a control pin (51) protruding perpendicularly from the rotation axle (30) and that the control pins (51) each engage in a control guide (52) in a fitting (60) of operating elements (6) disposed on both ends of the rotation axle (30), wherein the control guides (52) are oriented in the same direction.

10. The adjustment device as claimed in claim 9, **characterized in that** the operating elements (6) are mounted in the housing (1) so as to be rotatable mutually independently.

11. The adjustment device as claimed in at least one of the preceding claims, **characterized in that** the spring element (8) is disposed between one operating element (6) and one pinion (33) and the brake device (4) is disposed between the other operating element (6) and the other pinion (34).

12. The adjustment device as claimed in at least one of the preceding claims, **characterized in that** the tube (2) is connected to the housing by means of a guide device (7) which contains two diametrically opposed pairs of guide elements (71 - 74) that engage within each other and which is oriented parallel to the optical axis of the spotlight or optical device.

13. The adjustment device as claimed in claim 12, **characterized in that** the pairs of guide rails (71 - 74) each comprise a box-shaped guide rail (71, 72) protruding from the outer wall of the tube (2), each of which engages, in a longitudinally adjustable manner, a guide rail (73, 74) in the form of a recess in the inner wall of the housing (1), which has a cross-sectional profile matching the box-shaped guide rail (71, 72).

14. The adjustment device as claimed in at least one of the preceding claims, **characterized in that** the static friction of the guide rails (71 - 74) is greater than the frictional force between the brake cone (41) and the brake bearing (42) of the brake device (4) that can be connected to the brake cone (41) in a non-positively locked manner.

15. The adjustment device as.claimed in at least one of the preceding claims, **characterized in that** the rotation axle (30) is connected to an additional brake device that inhibits the rotation of the rotation axle (30) and thus inhibits independent movement of the tube (2).

## Revendications

1. Dispositif pour régler un tube optique agencé dans un boîtier d'un projecteur ou d'un appareil optique et guidé dans le boîtier dans la direction de l'axe optique du projecteur ou de l'appareil optique, avec un mécanisme d'entraînement de réglage (30 - 34) agencé entre le tube (2) et le boîtier (1), un actionneur (6) et un dispositif de freinage (4) qui, lorsque le mécanisme d'entraînement de réglage (30 - 34) n'est pas activé, relie le tube (2) au boîtier (1) par adhérence et/ou engagement positif et, en cas d'activation du mécanisme d'entraînement de réglage (30 - 34), débloque la liaison entre le tube (2) et le boîtier (1) et libère un réglage du tube (2) suivant l'axe optique du projecteur ou de l'appareil optique, **caractérisé en ce que**,

le mécanisme d'entraînement de réglage (30 - 34), par l'intermédiaire d'un dispositif de commande (51, 52) qui active ou désactive le dispositif de freinage (4), peut être couplé à l'actionneur (6) de telle sorte que, en cas d'actionnement de l'actionneur (6), le dispositif de freinage (4) débloque la liaison entre le tube (2) et le boîtier (1), en cas de poursuite de l'actionnement de l'actionneur (6), le mécanisme d'entraînement de réglage (30 - 34) règle le tube (2) suivant l'axe optique du projecteur ou de l'appareil optique et, en cas d'arrêt de l'actionnement de l'actionneur (6), le dispositif de freinage (4) relie de nouveau le tube (2) au boîtier (1) par adhérence et/ou engagement positif.

2. Dispositif de réglage selon la revendication 1, **caractérisé en ce que** le mécanisme d'entraînement de réglage (6 ; 30 - 34) est composé d'un mécanisme d'entraînement linéaire avec un élément à engagement positif (31, 32) relié au tube (2) et orienté parallèlement à l'axe optique du projecteur ou de l'appareil optique et un élément de réglage (33, 34) relié au boîtier (1) et en prise avec l'élément à engagement positif (31,32).

3. Dispositif de réglage selon la revendication 2, **caractérisé en ce que** l'élément à engagement positif est composé d'une crémaillère (31, 32) disposée sur la surface extérieure du tube (2) et orientée parallèlement à l'axe optique du projecteur ou de l'appareil optique et l'élément de réglage est composé d'un pignon (33, 34) engrené avec la denture de la crémaillère (31, 32) et relié solidairement en rotation à un axe de rotation (30) entraînable manuellement ou par moteur et déplaçable axialement.

**4.** Dispositif de réglage selon la revendication 3, **caractérisé en ce que** l'axe de rotation (30) est apte à être couplé à l'actionneur (6) entraînable manuellement ou par moteur par l'intermédiaire du dispositif de commande (51, 52) qui active ou désactive le dispositif de freinage (4).

**5.** Dispositif de réglage selon la revendication 4, **caractérisé en ce que** le dispositif de freinage (4) est composé d'un support de frein conique creux (42) fixé sur le boîtier (1) et d'un cône de freinage (41) relié à l'axe de rotation (30) et agencé à l'intérieur du support de frein conique creux (42), qui réalise une liaison par adhérence avec le support de frein conique creux (42) lors du déplacement axial de l'axe de rotation (30) dans une direction et, dans la direction opposée, débloque la liaison par engagement positif avec le support de frein conique creux (42).

**6.** Dispositif de réglage selon la revendication 5, **caractérisé en ce que** les surfaces se faisant face du cône de freinage (41) et du support de frein (42) présentent un coefficient de frottement élevé.

**7.** Dispositif de réglage selon la revendication 5, **caractérisé en ce que** le dispositif de commande comprend une tige de commande (51) qui s'éloigne de l'axe de rotation (30) et entre en prise dans une coulisse de commande (52), la coulisse de commande (52) étant formée de telle sorte que l'axe de rotation (30) est orienté axialement dans une position de repos neutre de telle sorte que le cône de freinage (41) est relié par adhérence et/ou engagement positif au support de frein (42) et que, en cas d'entraînement de l'actionneur (6) dans l'une ou l'autre direction de rotation, il est déplacé axialement de telle sorte que la liaison par adhérence et/ou engagement positif du cône de freinage (41) avec le support de frein (42) est débloquée.

**8.** Dispositif de réglage selon la revendication 7, **caractérisé en ce que** la coulisse de commande (52) est formée au niveau d'une embase cylindrique (60) de l'actionneur (6) qui reçoit une extrémité de l'axe de rotation (30) présentant la tige de commande (51) et qui est réglable en rotation par rapport à l'axe de rotation (30), et **en ce qu'**est agencé, entre l'embase (60) et le pignon (33, 34) relié à l'axe de rotation (30), un élément élastique (8) pré-contraignant le cône de freinage (41) dans la liaison par adhérence et/ou engagement positif avec le support de frein (42).

**9.** Dispositif de réglage selon au moins l'une des revendications précédentes, **caractérisé en ce que** l'élément à engagement positif est composé de deux crémaillères (31, 32) agencées espacées l'une de l'autre sur la surface extérieure du tube (2) et orientées parallèlement à l'axe optique du projecteur ou de l'appareil optique, et l'élément de réglage est composé de pignons (33, 34) engrenés avec la denture des crémaillères (31, 32) et reliés solidairement en rotation à un axe de rotation (30) entraînable manuellement ou par moteur et déplaçable axialement, **en ce que** les deux extrémités de l'axe de rotation (30) présentent une tige de commande (51) s'éloignant verticalement de l'axe de rotation (30) et **en ce que** les tiges de commande (51) entrent en prise dans respectivement une coulisse de commande (52) dans une embase (60) d'actionneurs (6) agencés aux deux extrémités de l'axe de rotation (30), les coulisses de commande (52) étant orientées dans la même direction.

**10.** Dispositif de réglage selon la revendication 9, **caractérisé en ce que** les actionneurs (6) sont montés pivotants indépendamment l'un de l'autre dans le boîtier (1).

**11.** Dispositif de réglage selon au moins l'une des revendications précédentes, **caractérisé en ce que** l'élément élastique (8) est agencé entre un actionneur (6) et un pignon (33), et **en ce que** le dispositif de freinage (4) est agencé entre l'autre actionneur (6) et l'autre pignon (34).

**12.** Dispositif de réglage selon au moins l'une des revendications précédentes, **caractérisé en ce que** le tube (2) est relié au boîtier au moyen d'un dispositif de guidage (7) orienté parallèlement à l'axe optique du projecteur ou de l'appareil optique et composé de deux paires de rails de guidage (71 - 74) agencées diamétralement l'une par rapport à l'autre et en prise l'une dans l'autre.

**13.** Dispositif de réglage selon la revendication 12, **caractérisé en ce que** les paires de rails de guidage (71 - 74) présentent respectivement un rail de guidage (71, 72) en forme de boîte s'éloignant de la paroi extérieure du tube (2) et entrant en prise de manière réglable longitudinalement dans respectivement un rail de guidage (73, 74) réalisé sous la forme d'un évidement de la paroi intérieure du boîtier (1) et présentant un profil de section correspondant au rail de guidage (71, 72) en forme de boîte.

**14.** Dispositif de réglage selon au moins l'une des revendications précédentes, **caractérisé en ce que** le frottement statique des rails de guidage (71 - 74) est supérieur à la force de frottement entre le cône de freinage (41) et le support de frein (42) du dispositif de freinage (4) pouvant être relié par adhérence au cône de freinage (41).

**15.** Installation de réglage selon au moins l'une des re-

**EP 2 697 562 B1**

vendications précédentes, **caractérisé en ce que** l'axe de rotation (30) est relié à un dispositif de freinage supplémentaire ralentissant la rotation de l'axe de rotation (30) et, ainsi, un mouvement autonome du tube (2).

# FIG 1

# FIG 2

EP 2 697 562 B1

# FIG 3

16

FIG 4

# FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1293722 A